# EUROPÄISCHE PATENTSCHRIFT

(11) **EP 1 691 432 B1**
(45) Veröffentlichungstag und Bekanntmachung des Hinweises auf die Patenterteilung: **26.12.2012**
(21) Anmeldenummer: 06002403.1
(22) Anmeldetag: 07.02.2006
(51) Int. Cl.: H01M 2/06, H01M 2/26, H01M 10/04, H01M 6/00

(54) **Galvanische Zelle**
Galvanic cell
Cellule galvanique

(30) Priorität: 14.02.2005 DE 102005007179
(43) Veröffentlichungstag der Anmeldung: 16.08.2006
(73) Patentinhaber: Biotronik CRM Patent AG, 6340 Baar (CH)
(72) Erfinder: Drews, Jürgen, Dr., 01796 Pirna (DE); Hickmann, Steffen, 01809 Heidenau (DE); Staub, Roland, 01819 Berggiesshübel (DE)
(74) Vertreter: Lindner-Vogt, Karin L.

(56) Entgegenhaltungen:
- WO-A-96/12319
- JP-A- 11 025 951
- US-A- 2 702 829
- US-A- 4 964 877
- US-A- 5 256 502
- US-A- 5 776 628
- US-A1- 2001 008 725
- US-A1- 2002 119 367

## Beschreibung

Die Erfindung betrifft eine galvanische Zelle, im Folgenden auch Batterie genannt, die insbesondere für den Einsatz in elektromedizinischen Implantaten wie beispielsweise Herzschrittmacher oder Defibrillatoren oder ähnlichen geeignet ist.

Speziell derartige Implantate stellen hohe Anforderungen an eine Batterie, da die Energieversorgung des Implantats üblicher Weise nur durch die Batterie gegeben ist. Im Falle der Erschöpfung der Batterie oder auch im Falle eines technischen Problems mit der Batterie muss in der Regel das gesamte Implantat ausgetauscht werden. Dies ist üblicher Weise mit einer Operation und einem stationären Krankenhausaufenthalt verbunden. Daher werden hohe Anforderungen sowohl an die Energiedichte der galvanischen Zelle als auch an deren Zuverlässigkeit gestellt.

Üblicher Weise werden hermetisch geschlossene galvanische Zellen hoher Energie- und Leistungsdichte als Batterien für solche Implantate wie Herzschrittmacher oder Defibrillatoren eingesetzt. Derartige galvanische Zellen sind für die Verwendung in implantierbaren medizinischen Geräten besonders geeignet. Entsprechende Batterien sind beispielsweise in dem US-Patent 5,587,258 und DE 44 38 784 beschrieben. Die vielfältigen Möglichkeiten, eine entsprechende Batterie zu realisieren ergeben sich beispielsweise auch aus der Publikation von Boone B. Owens (Editor) "Batteries for Implantable Biomedical Devices" Plenum Press, New York and London, 1986 und aus D. Linden, T. B. Redy "Handbook of Batteries" McGraw-Hill Professional Publishing, New York 2001.

Bekannte Batterien besitzen ein üblicher Weise zunächst offenes und nach Fertigstellung der Batterie hermetisch geschlossenes Gehäuse, mit Gehäuseteilen, von denen beispielsweise ein Gehäuseteil zunächst hohlgefäßartig mit einer zunächst offenen Stirnseite ausgebildet sein kann, während das andere Gehäuseteil ein Verschlussteil ist, welches das hohlgefäßartige Gehäuseteil an seiner zunächst offenen Stirnseite schließlich hermetisch verschließt.

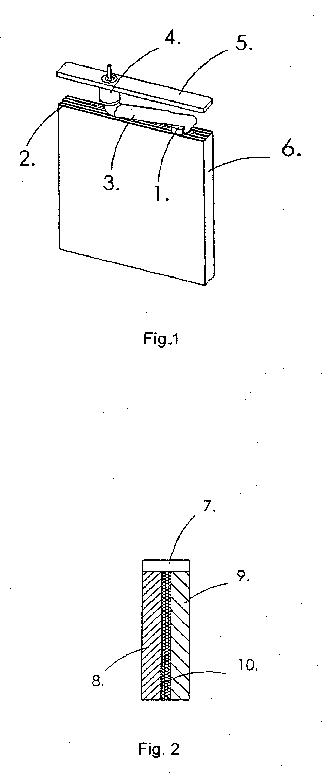

In solch einem Gehäuse sind zwei Arten von Elektroden angeordnet, nämlich Anoden (erste Elektrode(n) ) und Kathoden (zweite Elektrode(n) ), die jeweils eine Primärkontur besitzen, wobei die erste Elektrode oder die ersten Elektroden wenigstens eine über die Primärkontur nach außen hinausragende erste Kontaktfahne aufweisen und von Flachmaterial gebildet und zu einem Stapel geschichtet sind. Die wenigstens eine erste Art von Elektroden ist häufig mit einem elektrisch leitenden Gehäuseteil der Batterie elektrisch verbunden, während die zweite Art von Elektroden mit einem elektrisch leitenden, vom übrigen Gehäuse elektrisch isolierten Kontakt elektrisch verbunden ist. Dieser Kontakt ist häufig Bestandteil einer Gehäusedurchführung, die auch eine Filterdurchführung sein kann. Eine Abbildung einer entsprechenden, aus dem Stand der Technik bekannten Batterie findet sich in Figur 1.

Das US-Patent 4,964,877 zeigt eine solche Batterie, die weiterhin ein Formteil umfasst, welches mit wenigstens einer ersten Ausnehmung zur Aufnahme und Positionierung jeweils wenigstens eines Abschnitts der ersten Elektrode oder der ersten Elektroden versehen ist.

Ferner zeigt die US-Patentanmeldung 2001/0008725 eine Batterie, die einerseits über eine Mehrzahl erster Elektroden verfügt, wobei die Kontaktfahnen der einzelnen Elektroden zueinander in Längsrichtung der mittleren Kante versetzt angeordnet sind. Andererseits zeigt diese US-Anmeldung ein Formteil mit wenigstens eine zweiter Ausnehmung zur Aufnahme und Positionierung jeweils wenigstens eines Abschnitts der zweiten Elektrode oder der zweiten Elektroden aufweist.

Der Erfindung liegt die Aufgabe zugrunde, eine hinsichtlich Energiedichte, der Platzausnutzung und der Zuverlässigkeit optimierte Batterie zu schaffen, die dabei auch möglichst günstig und mit wenigen Arbeitsschritten herzustellen sein soll.

Erfindungsgemäß wird diese Aufgabe durch eine Batterie gemäß des Anspruchs 1 gelöst.

Dieses Formteil besteht vorzugsweise aus einem elektrisch isolierenden Material, beispielsweise aus Kunststoff und besitzt vorzugsweise für jede der ersten Elektroden eine eigene Aufnahme. Damit ist es möglich, die ersten Elektroden in das Formteil zu setzen und relativ zueinander zu positionieren. In einer bevorzugten Ausführungsvariante besitzt das Formteil außerdem Aufnahmen für die zweiten Elektroden, so dass beide Arten von Elektroden gleichermaßen mittels des Formteils relativ zueinander positioniert werden können.

Die der Aufnahme eines Abschnitts der jeweiligen Elektrode dienende Ausnehmung kann beispielsweise die Form eines flachen Schlitzes haben, in den dann eine entsprechend geformte Kontaktfahne einer jeweiligen Elektrode einzuführen ist. Diese Primärkontur ist beispielsweise durch drei im rechten Winkel aneinander anschließende Kanten definiert. Die vierte Kante, die die Primär-Kontur schließt, kann dabei an die Form des hohlgefäßartigen Gehäuseteils angepasst sein.

Wenn gemäß einer bevorzugten Ausführungsvariante sowohl die erste Art von Elektroden als auch die zweite Art von Elektroden jeweils Kontaktfahnen aufweisen, ist es vorteilhaft, wenn die Kontaktfahnen der ersten Art von Elektroden in eine andere Richtung weisen, als die Kontaktfahnen der zweiten Art von Elektroden. Entsprechend besitzt ein zur Aufnahme der jeweiligen Kontaktfahnen mit entsprechenden Ausnehmungen versehenes Formteil zwei Schenkel, die in unterschiedliche Richtung weisen, und vorzugsweise rechtwinklig zueinander angeordnet sind. Der eine Schenkel besitzt die Ausnehmungen zur Aufnahme der Kontaktfahne der ersten Art von Elektroden, während der zweite Schenkel die Ausnehmungen zur Aufnahme der Kontaktfahne in der zweiten Art von Elektroden aufweist.

Die Kontaktfahnen der zweiten Art von Elektroden sind vorzugsweise ausgebildet, einen elektrischen Kontakt beispielsweise in Form eines elektrisch leitenden Pins eine Durchführung zu kontaktieren. Eine derartige Durchführung ragt üblicher Weise um ein gewisses Maß in das Innere einer entsprechenden Batterie. Unter dem Aspekt der Optimierung der Energiedichte der Batterie ist es vorteilhaft, wenn die Fläche der einzelnen Elektroden so groß wie möglich ist. Um dennoch im Inneren des Batteriegehäuses Platz für eine nach Innen ragende Durchführung zu schaffen, ist es vorteilhaft, wenn die Elektroden bezüglich deren Primärkontur nach innen weisende Aussparungen aufweisen, die Platz für die ins Batteriegehäuseinnere ragende Durchführung schaffen. Die jeweilige Aussparung ist vorzugsweise in einer Ecke der Primärkontur angeordnet, so dass die Aussparung für die Durchführung zu zwei Kanten der Primärkontur hin offen ist.

Die der Kontaktierung des elektrisch leitenden Pins der Durchführung dienenden Kontaktfahnen der zweiten Art von Elektroden ragen vorzugsweise in die der Aufnahme der Durchführung dienende Ausparung der Elektroden hinein.

Vorzugsweise sind hierbei das Formteil und die Elektroden so gestaltet, dass die Kontaktfahnen der zweiten Art von Elektroden bei montierter Batterie durch die Ausnehmungen des Formteils für die Kontaktfahnen der zweiten Art von Elektroden hindurch an den elektrisch leitenden Kontaktpin der Durchführung heranreichen. Dazu ist der entsprechende Schenkel des Formteils so angeordnet, dass er in das Gehäuseinnere weist und den von den gestapelten Elektroden und deren Ausnehmungen gebildeten Raum zur Aufnahme der Durchführung auf einer Seite begrenzt.

Im Zusammenhang mit der letztgenannten Konstellation ist es besonders günstig, wenn das Formteil eine Aufnahme für die Durchführung besitzt, in die die Durchführung derart einzusetzen ist, dass die Durchführung montagegerecht positioniert ist. Diese Aufnahme grenzt vorzugsweise an den in das Gehäuseinnere ragenden zweiten Schenkel des Formteils, der die Ausnehmungen zur Aufnahme der Kontaktfahnen der zweiten Art von Elektroden besitzt.

Der erste Schenkel des Formteils, zu dem der zuletzt erwähnte zweite Schenkel des Formteils vorzugsweise im rechten Winkel verläuft, erstreckt sich vorzugsweise über denjenigen Teil der Stirnseite des hohlgefäßartigen Gehäuseteils, der bei montierter Batterie neben der Durchführung frei bleibt. Der erste Schenkel des Formteils verläuft dabei vorzugsweise parallel und in großer Nähe zu dem Verschlussteil mit welchem das hohlgefäßartige Gehäuseteil schließlich verschlossen wird, so dass ein im Ergebnis hermetisch dichtes Batteriegehäuse entsteht.

Aufgrund der vorbeschriebenen Merkmale ergibt sich eine neuartige galvanische Zelle, die eine hohe Energiedichte aufweist, da der von den Elektroden der galvanischen Zelle ausgefüllte Raum möglichst groß und der von den übrigen Elementen der Batterie wie beispielsweise dem isolierenden Formteil oder der Durchführung ausgefüllte Raum möglichst gering ist.

Gleichzeitig wird die Montage der Batterie erleichtert und die Funktionssicherheit der Batterie erhöht, in dem die Elektroden durch das Formteil positioniert und fixiert werden können. Gleichzeitig erlaubt das Formteil eine sichere Kontaktierung der Elektroden über deren Kontaktfahnen, die durch das Formteil jeweils einzeln in einem separaten Schlitz sicher gehalten sind.

Die genannten Vorteile werden durch das Vorsehen des Formteils möglich, welches wenigstens für eine erste Art von Elektroden entsprechende Ausnehmungen aufweist, die der Positionierung eines Abschnittes der Elektroden dienen.

Die Erfindung soll nun anhand eines Ausführungsbeispieles mit Bezug auf die
Figuren näher erläutert werden. Von den Figuren zeigen
   - Figur 1:: eine Batterie (galvanische Zelle) herkömmlicher Art zur Verwendung in elektromedizinischen Implantaten wie Herzschrittmachern;
   - Figur 2:: eine grob-schematische Darstellung des grundsätzlichen Aufbaus einer geeigneten galvanischen Zelle;
   - Figur 3:: eine Darstellung einer typischen Glas-Metall-Durchführung als Gehäusedurchführung für eine galvanische Zelle der hier beschriebenen Art;
   - Figur 4:: eine schematische Darstellung die die Kontaktierung einer Gehäusedurchführung wie aus Figur 3 durch Kontaktfahnen einer zweiten Art von Elektroden wiederspiegelt;
   - Figur 5:: eine schematische Darstellung einer ersten Art von Elektroden im Zusammenschau mit einem eine Durchführung tragenden Formteil;
   - Figur 6:: einen Stapel von ersten und zweiten Elektroden mit entsprechenden Kontaktfahnen;
   - Figur 7:: einen Ausschnitt eines besonders geeigneten Formteils in perspektivischer Darstellung;
   - Figur 8:: einen Ausschnitt des in Figur 7 dargestellten Formteils mit eingesetzter Durchführung;
   - Figur 9:: einen Ausschnitt des Formteils aus Figur 7 mit eingesetzter Durchführung und einer eingesetzten Elektrode der zweiten Art (Kathode) mit Kontaktfahnen zur Kontaktierung eines elektrisch leitenden Pins der Durchführung; und
   - Figur 10:: den in Figur 9 abgebildeten Ausschnitt mit einer zusätzlich angesetzten Elektrode erster Art (Anode) sowie einem Gehäuseverschluss.

Figur 1 zeigt eine Batterie gemäß dem Stand der Technik. Die Batterie besitzt ein Gehäuse mit einem hohlgefäßartigen Gehäuseteil 6 und einem Verschlussteil 5, durch welches eine Durchführung 4 hindurchgeführt ist. Bei fertig montierter Batterie sind das hohlgefäßartige Gehäuseteil 6, das Verschlussteil 5, die Durchführung 4 so dicht miteinander verbunden, dass die Batterie hermetisch dicht ist. Im Inneren des Gehäuses sind Elektroden 2 angeordnet, die mit Kontaktfahnen 1 versehen sind. Die Kontaktfahnen 1 der Elektroden 2 sind zusammengefasst und mit einem Kontakt in Form eines gebogenen Metall-Pins 3 der als Glas-Metall-Durchführung ausgebildeten Durchführung 4 elektrisch leitend verbunden, bevorzugt durch Verschweißen. Beim Schließen des Verschlussteils 5 wird der gebogene Pin 3 auf die zu einem Paket zusammengefassten Elektroden 2 herabgedrückt und durch Verschweißen des Verschlussteils 5 mit dem hohlgefäßartigen Gehäuseteil 6 in dieser Position fixiert.

Figur 2 zeigt den prinzipiellen Aufbau einer erfindungsgemäßen Batterie.

Die Elektroden 8, 9 der Batterie sind bevorzugt rechteckig ausgeführt. Die Breite der Elektroden ist so gewählt, dass das Gehäuse möglichst vollständig ausgefüllt ist (Fig. 2). Die Höhe der Elektroden ist so gewählt, dass ein Freiraum 7 zwischen den Elektroden und dem Verschlussteil des Batteriegehäuses entsteht, in den ein erfindungsgemäßes Formteil passgenau eingefügt ist. Die Elektroden der Batterie, nämlich Anoden 8 und Kathoden 9, sind jeweils gegenüberliegend angeordnet, getrennt von mindestens einem ionenleitenden, elektrisch isolierend wirkenden Separator 10.

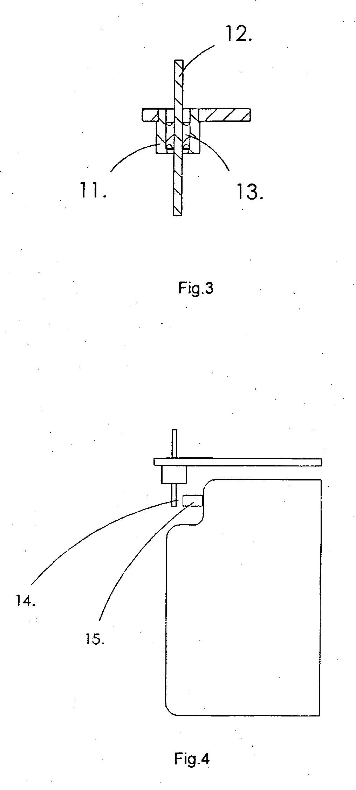

Ein Pol der Batterie wird mit Hilfe der Glas-Metall-Durchführung durch das Verschlussteil des Gehäuses geführt, siehe Figur 3. Die Glas-Metall-Durchführung besitzt eine metallische Buchse 11 in die ein metallischer Pin 12 mittels Glas oder Keramik 13 eingegossen ist. Das Glas oder die Keramik 13 der Glas-Metall-Durchführung stellt hierbei die Isolation des Pin 12 zur Buchse 11 und damit zum Gehäuse sicher und gewährleistet gleichzeitig den hermetischen Verschluss der Batterie. Die Kathode 9 der Batterie wird bevorzugt an den Pin 12 der Glas-Metall-Durchführung kontaktiert. Die Anode 8 wird bevorzugt an das metallische Gehäuse der Batterie kontaktiert.

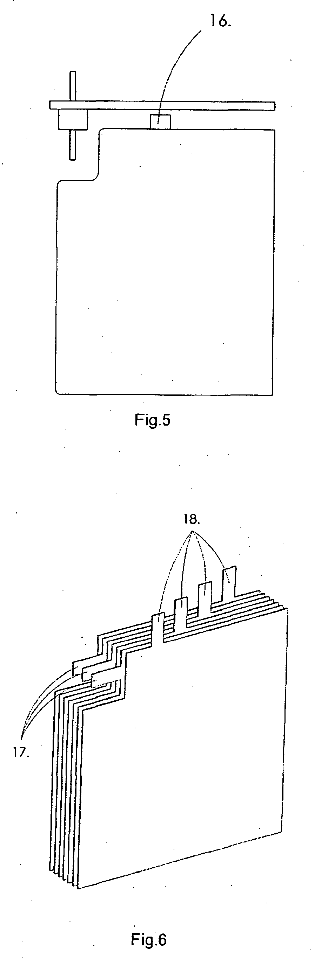

Wie den Figuren 4 und 5 zu entnehmen ist, weisen die Elektroden eine Aussparung 14 auf, die sich unterhalb der Stelle befindet, an der die Glas-Metall-Durchführung in den Deckel der Batterie eingefügt wird. Die Ableiter der Elektroden sind mit metallischen Kontaktfahnen 15, 16 versehen, über die die Ableiter mit dem Gehäuse bzw. dem Pin der Glas-Metall-Durchführung elektrisch leitend verbunden werden. Die Kontaktfahne 15, die mit dem Pin der Glas-Metall-Durchführung verbunden ist (bevorzugt die Kontaktfahne der Kathode), ist so angeordnet, dass sie in Richtung der Glas Metall-Durchführung weist. Die Kontaktfahne 16, die mit dem Batteriegehäuse verbunden ist (bevorzugt die Kontaktfahne der Anode) ist so angeordnet, dass sie in Richtung des Gehäusedeckels weist.

Besteht die Batterie, wie in Figur 6 abgebildet, aus mehreren Anoden bzw. Kathoden, so werden sie durch Stapeln, Wickeln oder Falten derart zusammengefügt, dass eine Anordnung entsteht, bei der jede Kathode einer Anode gegenüberliegt. Die Elektroden sind hierbei jeweils durch mindestens einen ionenleitenden, elektrisch isolierenden Separator 10 voneinander getrennt.

In diesem Fall sind die Kontaktfahnen 17, die mit dem Pin der Glas-Metall-Durchführung verbunden werden (bevorzugt die Kontaktfahnen der Kathode), parallel in einer Ebene angeordnet und weisen in Richtung der Glas Metall-Durchführung. Die Kontaktfahnen 18, die mit dem Batteriegehäuse verbunden werden (bevorzugt die Kontaktfahnen der Anode) sind versetzt angeordnet und treten unterhalb des Verschlussteils aus.

Im folgenden wird auf Form und Funktion des Formteils näher eingegangen.

Dieses Formteil wird bevorzugt aus einem elektrisch isolierendem, gegenüber dem Elektrolyten der Batterie inerten polymeren Werkstoff hergestellt. Bevorzugt geeignet sind Polyolefine wie Polyethylen oder Polypropylen oder polyhalogenierte Polymere oder Co-Polymere wie z.B. TEFLON^{®}, HALAR^{®}, KYNAR^{®} oder SOLE^{®}. Besonders bevorzugt sind Polymere die sich thermoplastisch formen lassen. Das Formteil kann auch aus einem Verbundwerkstoff bestehen (z.B. mit anorganischen Materialien gefüllte Polymere), um die mechanischen Eigenschaften des Materials zu verbessern.

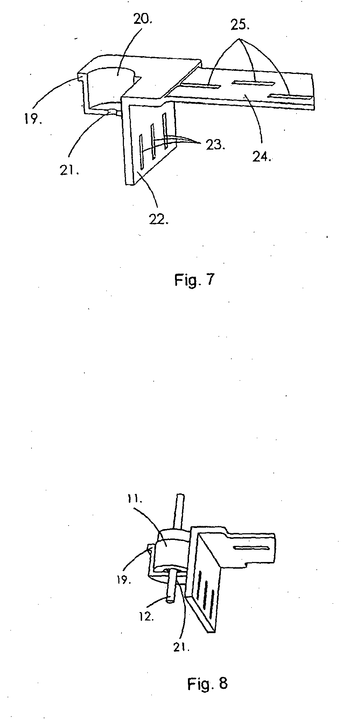

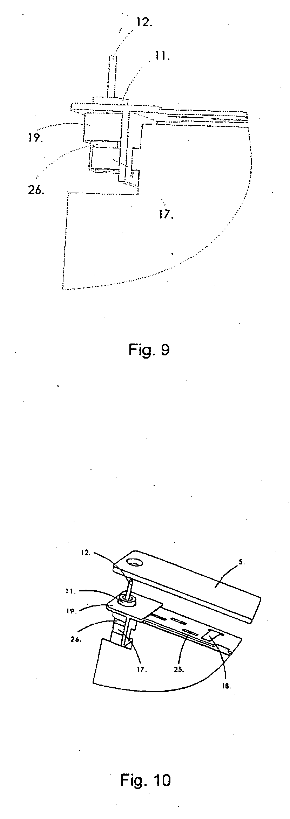

Im Folgenden sollen wie in Figur 7 bis 10 abgebildet noch einmal Vorteile der erfindungsgemäßen Batterie gegenüber einer aus dem Stand der Technik bekannten Batterie, wie sie in Figur 1 abgebildet ist, dargelegt werden:

Die Kontaktfahnen 18, welche mit dem Verschlussteil 5 des Gehäuses verbunden werden, sind versetzt angeordnet. Dadurch ist der notwendige Freiraum oberhalb der Elektroden auf ein Maß begrenzt, welches sich aus der Materialstärke des Komplexstücks oberhalb der Elektrode und der Materialstärke nur einer Kontaktfahne 18 ergibt. Die Energiedichte der Batterie wird hierdurch erhöht.

Das Formteil erfüllt dabei mehrere Funktionen:
- Derjenige Teil des Formteils, im konkreten Ausführungsbeispiel die Aufnahme 19, 20, 21, welcher die Buchse 11 der Glas-Metall-Durchführung umschließt, schützt die Durchführung vor mechanischer Beschädigung.
- Die Aufnahme 19, welche die Buchse 11 der Glas-Metall-Durchführung umschließt, schützt die Durchführung vor Kurzschlüssen. Eine zusätzliche Isolation in diesem Bereich kann entfallen.
- Durch die schlitzförmigen Ausnehmungen 23, 25 des Formteil werden die Kontaktfahnen 17, 18 kontrolliert geführt und so die Gefahr von Kurzschlüssen minimiert.
- Aufbau und Montage der Batterie (galvanischen Zelle) erfolgen sehr effektiv, da die Anzahl der zu Montage benötigten Einzelteile durch die Verwendung eines komplexen Formteils verringert wird.
- Durch das Formteil ist es möglich, die Kontaktierung an dem Pin 12 der Glas-Metall-Durchführung vorzunehmen, ohne diesen Verformen zu müssen. Hierdurch wird die Montage vereinfacht und zugleich das Risiko einer Beschädigung der Glas-Metall-Durchführung durch Verformen des Pins 12 minimiert.
- Das Formteil isoliert die Elektroden gegenüber dem Deckel, so das eine zusätzliche Isolation in diesem Bereich entfallen kann.

## Patentansprüche

1. Batterie
mit einem aus mehren Teilen zusammengesetzten Gehäuse, von denen ein Gehäuseteil hohlgefäßartig mit einer zunächst offenen Stirnseite ausgebildet ist und das andere Gehäuseteil ein Verschlussteil ist, welches das hohlgefäßartige Gehäuseteil an seiner zunächst offenen Stirnseite verschließt,
mit wenigstens einer ersten und wenigstens einer zweiten Elektrode, die jeweils eine Primärkontur besitzen, wobei die erste Elektrode oder die ersten Elektroden wenigstens eine über die Primärkontur nach außen hinausragende erste Kontaktfahne (16; 18) aufweisen, von einem Flachmaterial gebildet sind und von denen die wenigstens eine erste Elektrode mit einem elektrisch leitenden Gehäuseteil der Batterie elektrisch verbunden ist, während die zweite Elektrode mit einem elektrisch leitenden, vom übrigen Gehäuse elektrisch isolierten Kontakt elektrisch verbunden ist, wobei die ersten und zweiten Elektroden (8, 9) eine in der Draufsicht auf die jeweilige Elektrode zu wenigstens einer der Kanten der Primärkontur hin offene Aussparung aufweisen, und die zweite Elektrode (9) oder die zweiten Elektroden jeweils eine zweite Kontaktfahne (15; 17) zur Kontaktierung des elektrisch leitenden Kontaktes (12) aufweist bzw. aufweisen, die zur Kontaktierung des elektrisch leitenden Kontaktes (2) in die Aussparung hineinragt bzw. hineinragen,
sowie mit einem Formteil, welches mit wenigstens einer ersten Ausnehmung zur Aufnahme und Positionierung jeweils wenigstens eines Abschnitts der ersten Elektrode oder der ersten Elektroden versehen ist, **dadurch gekennzeichnet, dass** die zweiten Kontaktfahnen (17) in rechtwinklig zu den ersten Kontaktfahnen (18) verlaufende Richtung weisen und dass das Formteil
- für jede erste und zweite Kontaktfahne (16, 18; 15, 17) jeweils eine erste bzw. zweite Ausnehmung (25, 23) zur Aufnahme genau einer jeweiligen Kontaktfahne,
- einen parallel zur offenen Stirnseite verlaufenden ersten Schenkel (24), in dem sich die ersten Ausnehmungen (25) befinden, sowie
- einen im rechten Winkel zum ersten Schenkel (24) ausgerichteten zweiten Schenkel (22), in dem sich die zweiten Ausnehmungen (23) befinden,
aufweist.

2. Batterie nach Anspruch 1, **dadurch gekennzeichnet, dass** das Formteil zwischen Elektroden und Verschlussteil der Batterie angeordnet ist.

3. Batterie nach Anspruch 1 oder 2, **dadurch gekennzeichnet, dass** die Primärkontur wenigstens drei aneinander anschließende, wenigstens annähernd rechtwinkelig zueinander ausgerichtete Kanten aufweist und dass die jeweilige erste Kontaktfahne an der mittleren der drei Kanten anschließt.

4. Batterie nach Anspruch 3, **dadurch gekennzeichnet, dass** Batterie über eine Mehrzahl erster Elektroden verfügt und dass die Kontaktfahnen (18) der einzelnen Elektroden zueinander in Längsrichtung der mittleren Kante versetzt angeordnet sind.

5. Batterie nach einem der Ansprüche 1 bis 4, **dadurch gekennzeichnet, dass** die jeweilige erste Ausnehmung (25) des Formteils zur Aufnahme genau einer jeweiligen ersten Kontaktfahne gestaltet ist.

6. Batterie nach einem der Ansprüche 1 bis 5, **dadurch gekennzeichnet, dass** das Formteil wenigstens eine zweite Ausnehmung (23) zur Aufnahme und Positionierung jeweils wenigstens eines Abschnitts der zweiten Elektrode oder der zweiten Elektroden aufweist.

7. Batterie nach einem der Ansprüche 1 bis 6, **dadurch gekennzeichnet, dass** das Formteil wenigstens eine zweite Ausnehmung (23) zur Aufnahme der jeweiligen zweiten Kontaktfahne (15; 17) aufweist.

8. Batterie nach Anspruch 1, **dadurch gekennzeichnet, dass** der elektrisch leitende Kontakt (12) Teil einer Durchführung (11, 12, 13) ist, die neben dem Kontakt (12) einen den Kontakt umgebenden Isolationskörper (13) umfasst.

9. Batterie nach Anspruch 8, **dadurch gekennzeichnet, dass** das Formteil eine Aufnahme (19, 20, 21) für die Durchführung (11, 12, 13) aufweist.

10. Batterie nach Anspruch 9, **dadurch gekennzeichnet, dass** die Aufnahme (19, 20, 21) halbzylinderförmig derart gestaltet ist, dass die Durchführung seitlich in die Aufnahme (19, 20, 21) einzusetzen ist.

11. Batterie nach Anspruch 9 oder 10, **dadurch gekennzeichnet, dass** die Aufnahme (19, 20, 21) derart gestaltet ist, dass die Durchführung zumindest stirnseitig (21) gegenüber der zweiten Art von Elektroden elektrisch isoliert ist.

12. Batterie nach Ansprüchen 1 und 9, **dadurch gekennzeichnet, dass** der erste Schenkel (24) rechtwinklig an eine erste Flachseite des zweiten Schenkels (22) angrenzt und die Aufnahme (19, 20, 21) an eine dieser ersten Flachseite des zweiten Schenkels (22) angewandten, zweiten Flachseite des zweiten Schenkel (22) angrenzt.

13. Batterie nach einem der Ansprüche 1 bis 12, **dadurch gekennzeichnet, dass** mehrere, abwechselnd aufeinander folgende erste und zweite Elektroden mit jeweils gleicher Primärkontur vorgesehen sind, welche mit einander zugewandten Flachseiten nebeneinander derart angeordnet, dass die Primärkonturen der Elektroden sich in einer entsprechenden Draufsicht decken.

14. Batterie nach Anspruch 13, **dadurch gekennzeichnet, dass** eine vierte Kante der Primärkontur die Primärkontur schließt und eine Formgebung aufweist, die der Form des hohlgefäßartigen Gehäuseteils derart angepasst ist, dass die vierte Kante bis nahe an den der zunächst offenen Stirnseite des hohlgefäßartigen Gehäuseteils gegenüberliegenden Boden des hohlgefäßartigen Gehäuseteils heranreicht.

15. Batterie nach einem der Ansprüche 1 bis 14, **dadurch gekennzeichnet, dass** das Formteil derart angeordnet ist, dass dessen erster Schenkel (24) in unmittelbarer Nähe parallel zu dem Verschlussteil verläuft und der zweite Schenkel (22) in das Innere des hohlgefäßartigen Gehäuseteils weist.

16. Batterie nach einem der Ansprüche 1 bis 15, **dadurch gekennzeichnet, dass** die erste Elektrode oder die ersten Elektroden als Anode (8) und die zweite Elektrode oder die zweiten Elektroden als Kathode (9) ausgebildet sind.

## Claims

1. A battery,
comprising a housing assembled from a plurality of parts, of which one housing part is formed in the manner of a hollow vessel having an initially open end face and the other housing part is a closure part, which closes the hollow-vessel-like housing part at its initially open end face,
comprising at least one first and at least one second electrode, each of which have a primary contour, wherein the first electrode or the first electrodes have at least one first contact tab (16; 18) protruding outwardly beyond the primary contour, are formed from a planar material and of which the at least one first electrode is electrically connected to an electrically conductive housing part of the battery, whilst the second electrode is electrically connected to an electrically conductive contact which is electrically insulated from the remaining housing, wherein the first and second electrodes (8, 9) have a recess that is open, in plan view of the respective electrode, to at least one of the edges of the primary contour, and the second electrode (9) or the second electrodes has/each have a second contact tab (15; 17) for contacting the electrically conductive contact (12) which protrudes/protrude into the recess to contact the electrically conductive contact (2),
and comprising a moulded part which is provided with at least one first recess for receiving and positioning at least one portion of the first electrode or the first electrodes,
**characterised in that** the second contact tabs (17) point in a direction running at right angles to the first contact tabs (18), and **in that** the moulded part
- has a first and second recess (25, 23) for each first and second contact tab (16, 18; 15, 17) respectively for receiving precisely one respective contact tab,
- has a first branch (24), which runs parallel to the open end face and in which the first recesses (25) are located, and
- has a second branch (22), which is oriented at right angles to the first branch (24) and in which the second recesses (23) are located.

2. The battery according to Claim 1, **characterised in that** the moulded part is arranged between electrodes and the closure part of the battery.

3. The battery according to Claim 1 or 2, **characterised in that** the primary contour has at least three adjoining edges, which are oriented at least approximately at right angles to one another, and **in that** the respective first contact tab adjoins the middle of the three edges.

4. The battery according to Claim 3, **characterised in that** the battery has a plurality of first electrodes, and **in that** the contact tabs (18) of the individual electrodes are arranged offset to one another in the longitudinal direction of the middle edge.

5. The battery according to one of Claims 1 to 4, **characterised in that** the respective first recess (25) in the moulded part is designed to receive precisely one respective first contact tab.

6. The battery according to one of Claims 1 to 5, **characterised in that** the moulded part has at least one second recess (23) for receiving and positioning at least one portion of the second electrode or the second electrodes.

7. The battery according to one of Claims 1 to 6, **characterised in that** the moulded part has at least one second recess (23) for receiving the respective second contact tab (15; 17).

8. The battery according to Claim 1, **characterised in that** the electrically conductive contact (12) is part of a bushing (11, 12, 13), which, in addition to the contact (12), comprises an insulating body (13) enclosing the contact.

9. The battery according to Claim 8, **characterised in that** the moulded part has a receptacle (19, 20, 21) for the bushing (11, 12, 13).

10. The battery according to Claim 9, **characterised in that** the receptacle (19, 20, 21) is designed in the shape of a half cylinder in such way that the bushing is to be inserted laterally into the receptacle (19, 20, 21).

11. The battery according to Claim 9 or 10, **characterised in that** the receptacle (19, 20, 21) is designed in such a way that the bushing is electrically insulated, at least at its end face (21), with respect to the second type of electrodes.

12. The battery according to Claims 1 and 9, **characterised in that** the first branch (24) adjoins a first flat side of the second branch (22) at right angles and the receptacle (19, 20, 21) adjoins a second flat side of the second branch (22) applied to this first flat side of the second branch (22).

13. The battery according to one of Claims 1 to 12, **characterised in that** a plurality of first and second electrodes, following one another alternately and each having an identical primary contour, are provided and are arranged next to one another with flat sides facing toward one another in such a way that the primary contours of the electrodes are congruent in a corresponding plan view.

14. The battery according to Claim 13, **characterised in that** a fourth edge of the primary contour closes the primary contour and has a shape which is matched to the shape of the hollow-vessel-like housing part in such a way that the fourth edge extends close to the base of the hollow-vessel-like housing part, which is opposite the initially open end face of the hollow-vessel-like housing part.

15. The battery according to one of Claims 1 to 14, **characterised in that** the moulded part is arranged in such way that its first branch (24) runs in direct proximity and parallel to the closure part and the second branch (22) points into the interior of the hollow-vessel-like housing part.

16. The battery according to one of Claims 1 to 15, **characterised in that** the first electrode or the first electrodes are formed as anodes (18) and the second electrode or the second electrodes are formed as cathodes (9).

## Revendications

1. Batterie,
comprenant un logement assemblé à partir d'une pluralité de pièces, parmi lesquelles une pièce de logement est formée à la manière d'une cuve creuse possédant une face d'extrémité initialement ouverte, et l'autre pièce de logement est une pièce de fermeture, fermant la pièce de logement semblable à une cuve creuse, sur sa face d'extrémité initialement ouverte,
comprenant au moins une première et au moins une deuxième électrode, parmi lesquelles chacune possède un contour primaire, où la première électrode ou les premières électrodes possède/possèdent au moins une première languette de contact (16 ; 18) faisant saillie vers l'extérieur, au-delà du contour primaire, tout en étant consitutée d'un matériau planaire, et parmi lesquelles l'au moins une première électrode est reliée électriquement à une pièce de logement conductrice de la batterie, tandis que la deuxième électrode est reliée électriquement à un contact électriquement conducteur, qui est isolé électriquement du reste du logement, où les première et deuxième électrodes (8, 9) comportent, dans une vue en plan de chacune des électrodes, un évidement ouvert vers au moins l'un des bords du contour primaire, et la deuxième électrode (9) ou les deuxièmes électrodes possède/possèdent chacune une deuxième languette de contact (15 ; 17) pour la mise en contact avec le contact électriquement conducteur (12), la/les deuxième languette/s faisant saillie/s vers l'évidement pour la mise en contact avec le contact électriquement conducteur (2)
et comprenant une pièce moulée pourvue d'au moins un premier évidement destiné à recevoir et à positionner au moins une partie de la première électrode ou des premières électrodes,
**caractérisée en ce que** les deuxièmes languettes de contact (17) sont dirigées dans une direction formant des angles droits par rapport aux premières languettes de contact (18), et **en ce que** la pièce moulée
- possède un premier et un deuxième évidement (25, 23) pour chaque première et deuxième languette de contact (16, 18; 15, 17), chacun destiné à recevoir précisément une languette de contact respective,
- possède une première branche (24) s'étendant parallèlement à la face d'extrémité ouverte, et où se trouvent les premiers évidements (25), et
- possède une deuxième branche (22) orientée en angle droit par rapport à la première branche (24) et dans laquelle se trouvent les deuxièmes évidements (23).

2. Batterie selon la revendication 1, **caractérisée en ce que** la pièce moulée est agencée entre les électrodes et la pièce de fermeture de la batterie.

3. Batterie selon la revendication 1 ou 2, **caractérisée en ce que** le contour primaire possède au moins trois bords adjacents orientés au moins approximativement en angles droits les uns par rapport aux autres, et **en ce que** la première languette de contact respective rejoint le centre des trois bords.

4. Batterie selon la revendication 3, **caractérisée en ce que** la batterie possède une pluralité de premières électrodes, et **en ce que** les languettes de contact (18) des différentes électrodes sont agencées en décalage les unes par rapport aux autres, dans le sens longitudinal du bord du milieu.

5. Batterie selon l'une des revendications 1 à 4, **caractérisée en ce que** chacun des premiers évidements (25) dans la pièce moulée est conçu pour recevoir précisément une première languette de contact respective.

6. Batterie selon l'une des revendications 1 à 5, **caractérisée en ce que** la pièce moulée possède au moins un deuxième évidement (23) destiné à recevoir et à positionner au moins une partie de la deuxième électrode ou des deuxièmes électrodes.

7. Batterie selon l'une des revendications 1 à 6, **caractérisée en ce que** la pièce moulée possède au moins un deuxième évidement (23) destiné à recevoir la deuxième languette de contact respective (15 ; 17).

8. Batterie selon la revendication 1, **caractérisée en ce que** le contact électriquement conducteur (12) fait partie d'une bague (11, 12, 13) comprenant, en plus du contact (12), un corps isolant (13) enveloppant le contact.

9. Batterie selon la revendication 8, **caractérisée en ce que** la pièce moulée possède un réceptacle (19, 20, 21) pour la bague (11, 12, 13).

10. Batterie selon la revendication 9, **caractérisée en ce que** le réceptacle (19, 20, 21) est conçu comme un demi-cylindre, de sorte que la bague peut être insérée latéralement dans le réceptacle (19, 20, 21).

11. Batterie selon la revendication 9 ou 10, **caractérisée en ce que** le réceptacle (19, 20, 21) est conçu de telle manière que la bague est isolée électriquement, au moins sur sa face d'extrémité (21), par rapport au deuxième type d'électrodes.

12. Batterie selon les revendications 1 et 9, **caractérisée en ce que** la première branche (24) rejoint un premier côté plat de la deuxième branche (22) en formant un angle droit, et le réceptacle (19, 20, 21) rejoint un deuxième côté plat de la deuxième branche (22), appliqué sur le premier côté plat de la deuxième branche (22).

13. Batterie selon l'une des revendications 1 à 12, **caractérisée en ce qu'**une pluralité de premières et de deuxièmes électrodes, agencées l'une à la suite de l'autre alternativement et possédant chacune un contour primaire identique, sont prévues et agencées côte à côte, avec les côtés plats tournés les uns vers les autres, de sorte que les contours primaires des électrodes sont congruents dans une vue en plan correspondante.

14. Batterie selon la revendication 13, **caractérisée en ce qu'**un quatrième bord du contour primaire ferme le contour primaire et présente une forme adaptée à la forme de la pièce de logement semblable à une cuve creuse, de telle manière que le quatrième bord s'étend près du fond de la pièce logement semblable à une cuve creuse qui est opposée à la face d'extrémité initialement ouverte de la pièce de logement semblable à une cuve creuse.

15. Batterie selon l'une des revendications 1 à 14, **caractérisée en ce que** la pièce moulée est agencée de telle manière que sa première branche (24) s'étend directement à proximité de et parallèlement à la pièce de fermeture, tandis que la deuxième branche (22) montre vers l'intérieur de la pièce de logement semblable à une cuve creuse.

16. Batterie selon l'une des revendications 1 à 15, **caractérisée en ce que** la première électrode ou les premières électrodes est/sont formée(s) comme des anodes (18), et la deuxième électrode ou les deuxièmes électrodes est/sont formée(s) comme des cathodes (9).
